# EUROPEAN PATENT APPLICATION

(11) **EP 2 612 944 A1**
(43) Date of publication of application: **10.07.2013**
(21) Application number: 12150141.5
(22) Date of filing: 04.01.2012
(51) Int. Cl.: C22C 38/22, C22C 38/30, C22C 38/32, C22C 38/34, C22C 38/36, C03B 9/193, C03B 9/48, C22C 30/00, C23C 4/06

(54) **Plunger for use in manufacturing glass containers**

(71) Applicant: MEC Holding GmbH, 65812 Bad Soden (DE)
(72) Inventor: Muntner, Mike, Dublin, 24 (IE)
(74) Representative: Staudt, Armin Walter

(57) **Abstract**

A known plunger for use in manufacturing glass containers comprises a first portion to contact with a gob of molten glass, and a second portion, whereby at least the first portion is coated with a metal coating of a self-fluxing alloy. Starting therefrom, to provide an improved, easy and cost-effective producible coated plunger for use in manufacturing glass containers with an improved wear, corrosion and thermal fatigue resistance and an increased lifetime, it is suggested according to the invention that the self-fluxing alloy is a Fe-based alloy containing at least 15 wt. % Co, and whereby the microhardness of the metal coating is in the range between 300 HV0.3 and 900 HV0.3.

## Description

The present invention relates to an improved plunger for use in manufacturing glass containers comprising a first portion to contact with a gob of molten glass, and a second portion, whereby at least the first portion is coated with a metal coating of a self-fluxing alloy.

### Technical background

In the glass industries several methods are applied for the automated production of glass containers. These methods have at least the following basic steps in common: (1) a step of manufacturing a parison, which is a pre-form of the glass container, (2) optionally, a step of rewarming the parison to compensate temperature differences, and (3) a step of forming the final shape of the glass container. Often, the final glass container is formed in two quick moulding steps so that optional step (2) is not required. Especially the shape of the parison has an influence on the glass distribution in final glass container.

For manufacturing the glass container, currently two well established methods are mainly used: the *"blow-and-blow"* method and the *"press-and-blow"* method.

In the *"blow-and-blow"* method a gob of molten glass is supplied to a parison mould which at its bottom is sealed by a short plunger. First, the glass is blown to the bottom of the mould to settle on the plunger. Then, the plunger is slightly retracted and air is blown through the plunger to form a hollow parison. The parison is transferred to the final blow mould and the glass is blown out into the mould.

In the *"press-and-blow"* a gob of molten glass is supplied to a parison mould and a long metal plunger is pressed into the glass to provide a hollow parison. Then, the parison is transferred to the final blow mould and the glass is blown out into the mould.

Compared with the *"blow-and-blow"* method, the *"press-and-blow"* method ensures a more uniform glass distribution in the parison. This enables the glass manufacturer to produce bottles at lower glass weights.

However, hot glass is a very aggressive environment when it comes in contact with the metal plunger. Glass is hard and abrasive and the high temperature accelerates the wear of the plunger and leads to surface oxidation and corrosion. Due to the surface oxidation and the corrosion of the plunger, flaking off the oxidized or corroded layer as well as mixing parts of said layer into the parison may occur.

To protect the metal plunger against wear and corrosion, it was suggested to apply a coating on the plunger surface. Most commonly, this coating is a nickel-based matrix which may contain hard particles. A commonly used nickel-based alloy is "Colmonoy 88" that has a mean microhardness of about 680 HV0.3 and the following nominal composition: 0.8 wt. % C, 4.0 wt. % Si, 3.0 wt. % B, 15.0 wt. % Cr, 3.5 wt. % Fe and 16.5 wt. % W, the balance being nickel.

But even plungers coated with such a nickel-based matrix may also cause a small oxidized layer on the plunger surface which may be flaked off from the plunger and adhere to the parison. Also, small particles of nickel can break free from the plunger and cause defects on the inside of the final glass container. Even more, this nickel could come in contact with a liquid stored in said glass container, thereby causing medical troubles.

Hence, in US 5,120,341A a *"press-and-blow"method* for manufacturing a glass container is described. The method applies a long metal plunger as described above. The portion of the plunger which is in contact with the gob of molten glass is coated with a coating of ceramics and/or self-fluxing alloy to prevent the oxidation of the surface portion of the plunger. The coating is a ceramic coating constructed of ceramics selected form the group of TiN, TiC, TiCN, TiB₂, SiC and Al₂O₃ which is a high oxidation proof material so that flaking of an oxidized layer as well as a subsequent mixing into the parison is reduced. The sprayed metal coating comprises a self-fluxing alloy selected from the cobalt series or the nickel series alloys.

However, plungers coated with ceramics have several disadvantages. Especially because of the mismatches of the respective coefficients of thermal expansion, a tough bonding of ceramics and metals is technically demanding. Such coatings are therefore expensive and difficult to produce in a repeatable quality. Ceramic coatings, especially those with an incomplete bonding of the ceramic to the metal, can easily flake off, thereby reducing the lifetime of the plunger. Furthermore, the repetitive plunging imposes a thermal cycling to the plunger surface which causes fatigue cracks to form and further accelerates the wear mechanisms. Coatings made of cobalt-based alloys are expensive to produce.

### Object of the invention

It is an object of the invention to provide an improved coated plunger for use in manufacturing glass containers, which can be produced easily and cost-effective and which shows an improved wear, corrosion and thermal fatigue resistance and an increased lifetime.

### Summary of the invention

Starting from the above mentioned plunger, this object is achieved according to the invention in that the self-fluxing alloy is a Fe-based alloy containing at least 15 wt. % Co, and whereby the microhardness of the metal coating is in the range between 300 HV0.3 and 900 HV0.3

The plunger coating according to the invention must be able to withstand an aggressive environment caused by hot or molten glass. Surprisingly, it has been found that Fe-based alloys as specified above are well suited to withstand these conditions.

These self-fluxing Fe-based alloys according to the invention are based on the main constituent iron; additionally it comprises at least 15 wt. % of cobalt and it shows a medium range of hardness. The addition of cobalt improves the wear resistance of the alloy, especially under the conditions of glass moulding.

Cobalt based alloys have been used for plunger coating in the past. They provide some benefits relating to lifetime of the plunger but they have not found wide acceptability. One reason for this is that their surface emissivity is such that they do not provide a visual cue to the operator that the plunger is too cold or too hot during operation. This disadvantage is avoided by the Fe-based alloy according to the invention. On the other hand, the addition of at least 15 wt. % of cobalt provides some of the above mentioned benefits of Cobalt-based alloys but still shows different emissivity depending on plunger temperature. Especially, when the plunger is overheated, slight variations of the surface appearance can be observed. During automated glass container production this effect may be used by the operator to adjust the process temperature, thereby avoiding overheating of the plungers and moulds.

Preferably, the Fe-based alloy contains at least 20 wt. % Co.

The addition of cobalt improves the wear resistance of the alloy, especially under the conditions of glass moulding. Especially good results concerning the mould life of the Fe-based alloy were achieved, when the Fe-based alloy contains at least 20 wt. % of cobalt.

Moreover, it is well known that the wear resistance of a material can be improved by providing a material with an enhanced hardness, but on the other hand, harder materials often show brittle failures. Raising the hardness of the material is often accompanied by a higher brittleness so that a compromise between the hardness and the brittleness is required.

For example, in comparison to nickel-based matrices, it has surprisingly been found that the Fe-based alloy according to the invention offers an acceptable wear resistance even at a relatively low hardness of about 300 HV0.3. It is obvious that these alloys show also less brittleness. But even Fe-based alloys with a comparatively high hardness of about 900 HV0.3 exhibit a low brittleness. Therefore, materials showing a good compromise between brittleness and hardness can be achieved whereby wear resistance, the resistance to fatigue as well as the lifetime of the plunger are improved. The improved resistance to fatigue may be due to a reduced thermal expansion coefficient of the Fe-based alloy according to the invention.

The microhardness of the metal coating is determined by a micro-indentation testing using a Vickers indenter. In this test a pyramid-shaped diamond is forced against the test material with a force of 0.3kgf (2,94N) for a standard dwell time of 10 to 20 seconds which results in an indentation of the material. The size (area in mm²) of the indentation determines the hardness value expressed in kgf/mm² units (1 kgf/mm² = 9.80665MPa).

A Fe-based alloy according to the invention which has microhardness of less than 300 HV0.3 has only a low wear resistance. An alloy with a microhardness of more than 900 HV0.3 could demonstrate poor resistance to fatigue.

In a preferred modification of the present invention the microhardness of the metal coating is in the range between 400 HV0.3 and 800 HV0.3, most preferably in the range between 400 HV0.3 and 600 HV0.3.

However, when the Fe-based alloy has a microhardness within said range an especially suitable compromise between a sufficient wear resistance and the brittleness of the material is made.

Furthermore, by using a Fe-based alloy instead of a nickel-based alloy, the production costs are significantly reduced.

In a first preferred modification of the present invention the content of Ni in said Fe-based alloy is less than 7 wt. %, most preferred less than 0.1 wt. %.

Nickel particles which break free from the plunger can cause defects on the inside of the glass container. Therefore, it is desirable to reduce the content of nickel in the plunger coating. A nickel content of less than 7 wt. % in the plunger coating has only a small impact on the quality of the glass container. Furthermore, nickel is classified as a toxic substance which can, for example, cause allergies. During the bottle production the coating of the plunger is in direct contact to the inner surface of the bottle so that nickel particles also could contaminate the bottle content. Therefore, there is an increasing demand for plunger coatings containing less nickel. If the content of nickel in the Fe-based alloy is less than 0.1 wt. % the release of nickel form the plunger surface is negligible.

In a preferred modification of the present invention the Fe-based alloy is an Iron - Cobalt - Chromium alloy comprising (in wt. %, balance = Fe):

| | | |
|---|---|---|
| C | 0,5 - | 2,5 |
| Si | 1,0 - | 4,0 |
| B | 1,5 - | 6,0 |
| Cr | 15,0 - | 30,0 |
| Ni | 0 - | 5,0 |
| Co | 15 - | 40,0 |
| W | 1,2 - | 5,0 |
| Mo | 0 - | 5,0 |
| Cu | 0 - | 5,0 |
| P | 0 - | 3,0 |
| N | 0 - | 1,0 |

The self-fluxing Fe-based alloy may be further alloyed with Al (aluminium), Mn (manganese), Mo (molybdenum), Nb (niobium), S (sulfur), Ti (titanium), V (vanadium), Zn (zinc) or Zr (zirconium). The individual amount of each of these metals ranges from 0.01 wt. % to about 2 wt. %. The overall content of those additional elements is less than 10 wt. %, preferably less than 5 wt. % and most preferred less than 2 wt. %.

An even more suitable composition of the Fe-based alloy is an Iron - Cobalt - Chromium alloy comprising (in wt. %, balance = Fe):

| | | |
|---|---|---|
| C | 1,0 - | 2,0 |
| Si | 1,5 - | 3,0 |
| B | 2,1 - | 3,9 |
| Cr | 18,0 - | 28,0 |
| Ni | 0 - | 3,0 |
| Co | 20,0 - | 39,0 |
| W | 1,7 - | 3,4 |
| Mo | 0 - | 3,0 |
| Cu | 0 - | 3,0 |
| P | 0 - | 3,0 |
| N | 0 - | 1,0 |

Equally preferred is an Iron - Cobalt - Chromium alloy comprising the following constituents in the ranges below (in wt. %, balance = Fe):

| | | |
|---|---|---|
| C | 1,2 - | 1,8 |
| Si | 1,7 - | 2,6 |
| B | 2,4 - | 4,0 |
| Cr | 17,2 - | 26,0 |
| Ni | 0 - | 4,0 |
| Co | 24,0 - | 36,0 |
| W | 2,0 - | 3,0 |
| Mo | 0 - | 3,0 |
| Cu | 0 - | 2,0 |
| P | 0 - | 1,5 |
| N | 0 - | 1,0 |

Most preferred is an Iron - Cobalt - Chromium alloy comprising the following constituents in the ranges below (in wt. %, balance = Fe):

| | | |
|---|---|---|
| C | 1,3 - | 1,7 |
| Si | 2,0 - | 2,5 |
| B | 2,75 - | 3,3 |
| Cr | 19,0 - | 24,0 |
| Ni | 0 - | 3,0 |
| Co | 27,0 - | 35,0 |
| W | 2,0 - | 3,0 |
| Mo | 0 - | 2,0 |
| Cu | 0 - | 1,0 |
| P | 0 - | 1,0 |
| N | 0 - | 1,0 |

Good results were achieved, when the thickness of the metal coating is between 0.5 mm and 3 mm, preferably, when it is between 0.5 mm and 2 mm.

A uniform, smooth coating with a thickness smaller than 0.5 mm is difficult to apply. Metal coatings according to the invention with a thickness of more than 3 mm are expensive to produce.

Good results were achieved when the metal coating is applied by spraying.

The application of a metal coating by spraying is quick and easy to perform. The fusing temperature range depends on the melting temperature of the Fe-based alloy.

In an alternative modification of the present invention the metal coating is applied by dipping.

The application of the metal coating can be performed by dipping the plunger in a melt or a dispersion of the Fe-based alloy. When subsequent fusing is required, the fusing temperature range depends on the melting temperature of the Fe-based alloy.

In a further modification of the present invention the metal coating is applied by pasting.

The application of the powdered Fe-based alloy by pasting is advantageous if a wider range of particle sizes in the powder is used. In such a process, particle sizes in the range between 5 to 200 µm, preferably in the range between 10 to 120 µm, can be applied and thereby the overall cost of the coating material is reduced. The fusing temperature range depends on the melting temperature of the Fe-based alloy.

In a preferred modification of the present invention the applied metal coating is fused at a fusing temperature ranging between 1,020 °C and 1,150 °C, preferably at a fusing temperature ranging between 1,050 and 1,080 °C.

The fusing temperature range depends on the melting temperature of the Fe-based alloy. It has been found that a fusing temperature ranging between 1,020 °C and 1,150 °C is appropriate for fusing the Fe-based alloy according to the invention. A preferred fusion temperature is in the range between 1,050 to 1,080 °C.

In a further modification of the present invention hard particles are embedded in the Fe-based alloy.

A metal coating for a plunger must be highly wear and corrosion resistant. By addition of hard particles to the Fe-based alloy the wear resistance of said alloy is increased. The hard particles which are embedded in the Fe-based alloy may consist of grains of carbides (e.g. titanium carbide, tungsten carbide, silicon carbide), nitrides (e.g. titanium nitride, aluminium nitride), borides (e.g. titanium boride, zirconium boride) or oxides (e.g. aluminium oxide). To provide uniform wear resistance the hard particles are evenly distributed over the whole plunger coating. The particle size depends upon the method of coating application and the corresponding particle size distribution of the Fe-based matrix powder. Preferably, the particle size of said hard particles is between 5 µm and 200 µm, most preferably, the particle size of said hard particles is within the range from 10 to 125 µm.

In some applications the use of hard particles would not be preferred in order to maximise fracture toughness and fatigue resistance. In other applications, in order to achieve a high wear resistance of the coating the loading of hard particles should be as high as possible. However, best results were obtained when weight portion of said hard particles is in the range between 20 wt.% and 60 wt.%. If the weight portion of hard particles embedded in the Fe-based alloy is lower than 20 wt%, the wear resistance of the material obtained is only slightly improved. If the amount of hard particles is higher than 60% the material obtained is difficult to process and may have reduced fracture toughness and fatigue life .

### Preferred embodiments

In the drawings shows
- **Fig.1**: a schematically sectional drawing of a plunger for use in manufacturing glass containers coated with a Fe-based self-fluxing alloy in accordance with the principles of the invention,
- **Fig. 2**: a chart diagram depicting the projected mean operating time of plungers differing in their metal coating.

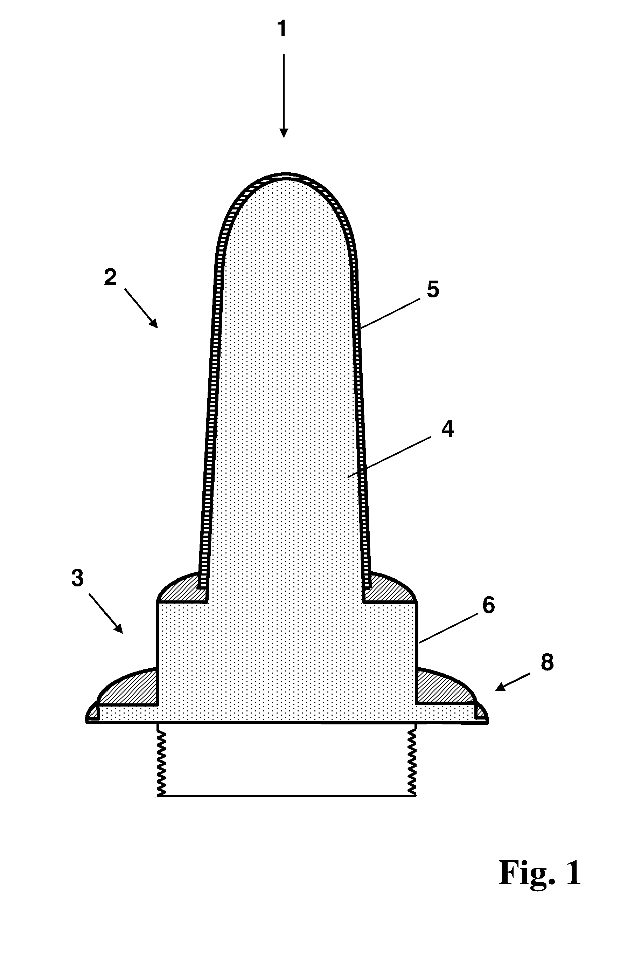

**Fig. 1** illustrates a plunger for the manufacture of a 33cl bottle by the *"press-and-blow"* method. Plunger 1 consists of a first portion 2 to contact a gob of molten glass and a second portion 3 which includes a base of the plunger 1 and which does not come into contact with the molten glass. The plunger 1 comprises a core 4 which is made of single part of 1.7335 steel (Chemical composition in weight %: 0.14% C, 0.18% Si, 0.52% Mn, 0.012% P, 0.013% S, 0.93% Cr, 0.47% Mo, 0.13% Ni, 0.15% Cu.). It comprises an enlarged plunger base 6 with an extending flange portion 8 and a plunger nose 2 comprising a tip and a shank region.

The plunger 1 is 170 mm in length, whereby the length of the plunger nose 2 is 150 mm and the length of the plunger base 6 is 8 mm. The width of the plunger base 6 is 20 mm. Just above the base the plunger nose 2 has a diameter of 18.5 mm. The plunger nose is coated with an alloy according to the invention.

### Example - Coating

A Fe-based alloy having the composition as shown in Table 1 was atomized and formed into a powder with a mean particle size of 100 µm.

**Table 1 (HV2)**

| | |
|---|---|
| C | 1.5 wt. % |
| Si | 2.0 wt. % |
| B | 3.0 wt % |
| Cr | 21.5 wt % |
| Ni | 3.5 wt % |
| Co | 30.0 wt % |
| W | 2.0 wt % |
| Fe | Balance |

The powder is deposited as a layer on the plunger nose surface using a High Velocity Oxygen Fuel (HVOF) thermal spray process. Subsequently, the sprayed layer is fused by induction fusion at 1,100 °C. The mean thickness of the layer obtained is approximately 1 mm. In order to avoid cracks the fused layer is cooled down slowly. It has a mean microhardness of 457 HV0.3.

In an alternative embodiment of the present invention, instead of induction fusion other heating processes, e.g. by flame or in an oven, is used.

In addition, only the layer at the shank and the tip are again manually fused by flame assisted melting. Finally, the plunger nose surface is machined and polished. In an alternative embodiment, the alloy shown in table 1 is mixed with preformed fused tungsten carbide particles. The mean particle size of the tungsten carbide particles is equivalent to the size distribution of the alloy matrix powder, whereby the mean particle size is 100 µm. The resulting material is a mixture of up to 80 wt.-% of said Fe-based alloy and 20 wt.-% tungsten carbide particles. The mixture is deposited on the plunger nose surface by HVOF or thermal spraying or by dipping in a melt of the powder or by spraying or pasting with a slurry of the powder.

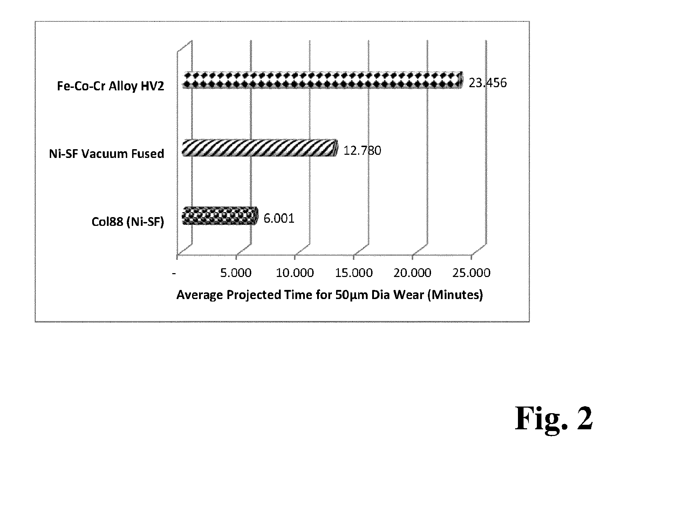

In the chart diagram of **Fig. 2** projected mean times for three differently coated plungers are shown. These projected mean times are calculated for a wear diameter of 50 µm. The coating of the first plunger is made of a Fe-Co-Cr based self-fluxing alloy according to the invention (HV-2) with a composition as shown in Table 1. For comparison purposes only, the second and third sets of plunger coatings are of Ni-based self fluxing coatings. The second coating Colmonoy 88 (Col 88) is an HVOF applied and subsequently fused coating.

The third coating is also a Ni-based self-fluxing alloy, ProTec X136. However it is applied by thermal spray and subsequently vacuum fused.

Considering a maximal allowed wear diameter of 50 µm, the plunger coated with Colmonoy 88 achieves a mean operating time of just over 6,000 hours. The ProTec X136 Vacuum fused Ni-based coating achieved a maximum operating time of 14,000 hours. However, the mean operating time of the plunger coated with the Fe-based alloy HV2 coating achieves approximately 23,500 hours. The projected mean operating time of the Fe-based alloy is compared to the plunger with the Colmonoy 88-coating nearly four times and the vacuum fused coating two times increased. The hardness of the Fe based alloy plunger's coating is 457 HV0.3, compared to hardness of the Colmonoy 88 is 678 HV0.3 and of the ProTec X136 vacuum fused coating is 750 HV0.3. Although the plunger coated with HV-2 has the lowest hardness (457 HV0.3) of the three, it has the highest measured wear life.

Interestingly, it was found that due to the thermal cycling of the plunger a coating with a hardness higher than about 900 HV0.3 subjects more easily to coating cracking at the tip, so that a compromise between the wear performance and the stability of the coating must be made. The coating according to the invention provides such a compromise. It has a hardness in the range from 300 HV0.3 to 900 HV0.3, preferably from 400 HV0.3 to 800 HV0.3. This material is less brittle than the usual Ni-based alloys.

## Claims

1. A plunger for use in manufacturing glass containers comprising a first portion to contact with a gob of molten glass, and a second portion, whereby at least the first portion is coated with a metal coating of a self-fluxing alloy, **characterised in that** the self-fluxing alloy is a Fe-based alloy containing at least 15 wt. % Co, and whereby the microhardness of the metal coating is in the range between 300 HV0.3 and 900 HV0.3.

2. A plunger according to claim 1, **characterized in that** the content of Ni in said Fe-based alloy is less than 7 wt.%.

3. A plunger according to claim 1 or 2, **characterized in that** the content of Ni in said Fe-based alloy is less than 0.1 wt. %.

4. A plunger according to any of the preceding claims, **characterized in that** the Fe-based alloy contains at least 20 wt. % Co.

5. A plunger according to claim 1, **characterized in that** the Fe-based alloy is an Iron - Cobalt - Chromium alloy comprising (in wt. %, balance = Fe):
| | | |
|---|---|---|
| C | 0,5 - | 2,5 |
| Si | 1,0 - | 4,0 |
| B | 1,5 - | 6,0 |
| Cr | 15,0 - | 30,0 |
| Ni | 0 - | 5,0 |
| Co | 15,0 - | 40,0 |
| W | 1,2 - | 5,0 |
| Mo | 0 - | 5,0 |
| Cu | 0 - | 5,0 |
| P | 0 - | 3,0 |
| N | 0 - | 1,0 |

6. A plunger according to claim 5, **characterized in that** the Fe-based alloy is an Iron - Cobalt - Chromium alloy comprising (in wt. %, balance = Fe):
| | | |
|---|---|---|
| C | 1.0 - | 2.0 |
| Si | 1,5 - | 3,0 |
| B | 2,1 - | 3,9 |
| Cr | 18,0 - | 28,0 |
| Ni | 0 - | 3,0 |
| Co | 20,0 - | 39,0 |
| W | 1,7 - | 3,4 |
| Mo | 0 - | 3,0 |
| Cu | 0 - | 3,0 |
| P | 0 - | 3,0 |
| N | 0 - | 1,0 |

7. A plunger according to claim 6 **characterized in that** the Fe-based alloy is an Iron - Cobalt - Chromium alloy comprising (in wt. %, balance = Fe):
| | | |
|---|---|---|
| C | 1,2 - | 1,8 |
| Si | 1,7 - | 2,6 |
| B | 2,4 - | 4,0 |
| Cr | 17,2 - | 26,0 |
| Ni | 0 - | 4,0 |
| Co | 24,0 - | 36,0 |
| W | 2,0 - | 3,0 |
| Mo | 0 - | 3,0 |
| Cu | 0 - | 2,0 |
| P | 0 - | 1,5 |
| N | 0 - | 1,0 |

8. A plunger according to claim 7, **characterized in that** the Fe-based alloy is an Iron - Cobalt - Chromium alloy comprising (in wt. %, balance = Fe):
| | | |
|---|---|---|
| C | 1,3 - | 1,7 |
| Si | 2,0 - | 2,5 |
| B | 2,75 - | 3,3 |
| Cr | 19,0 - | 24,0 |
| Ni | 0 - | 3,0 |
| Co | 27,0 - | 35,0 |
| W | 2,0 - | 3,0 |
| Mo | 0 - | 2,0 |
| Cu | 0 - | 1,0 |
| P | 0 - | 1,0 |
| N | 0 - | 1,0 |

9. A plunger according to any of the preceding claims, **characterized in that** the microhardness of the metal coating less than is in the range between 400 HV0.3 and 800HV0.3, most preferably in the range between 400 HV0.3 and 600 HV0.3.

10. A plunger according to any of the preceding claims, **characterized in that** the thickness of the metal coating is between 1 mm and 3 mm, preferably, it is between 0.5 mm and 2 mm.

11. A plunger according to any of the preceding claims, **characterized in that** the metal coating is applied by spraying.

12. A plunger according to any of the preceding claims 1 to 10, **characterized in that** the metal coating is applied by dipping.

13. A plunger according to any of the preceding claims 1 to 10, **characterized in that** the metal coating is applied by pasting.

14. A plunger according to any of the preceding claims 11 to 13, **characterized in that** the applied metal coating is fused at a fusing temperature ranging between 1,020 °C and 1,150 °C, preferably at a fusing temperature ranging between 1,050 and 1,080 °C.

15. A plunger according to any of the preceding claims, **characterized in that** hard particles are embedded in the Fe-based alloy.

## Amended claims

### Amended claims in accordance with Rule 137(2) EPC.

**1.** A plunger for use in manufacturing glass containers comprising a first portion to contact with a gob of molten glass, and a second portion, whereby at least the first portion is coated with a metal coating of a self-fluxing alloy, **characterised in that** the self-fluxing alloy is a Fe-based alloy containing at least 15 wt. % Co, and whereby the microhardness of the metal coating is in the range between 300 HV0.3 and 900 HV0.3, whereby the Fe-based alloy is an Iron - Cobalt - Chromium alloy comprising (in wt. %, balance = Fe):
| | | |
|---|---|---|
| C | 0,5 - | 2,5 |
| Si | 1,0 - | 4,0 |
| B | 1,5 - | 6,0 |
| Cr | 15,0 - | 30,0 |
| Ni | 0 - | 5,0 |
| Co | 15,0 - | 40,0 |
| W | 1,2 - | 5,0 |
| Mo | 0 - | 5,0 |
| Cu | 0 - | 5,0 |
| P | 0 - | 3,0 |
| N | 0 - | 1,0 |
whereby the Fe-based alloy may be further alloyed with additional metals selected from the group consisting of Al, Mn, Nb, S, Ti, V, Zn and Zr, whereby the individual amount of each of the additional metals ranges from 0.01 wt. % to about 2 wt. % and whereby the overall content of the additional metals is less than 10 wt. %.

**2.** A plunger according to claim 1, **characterized in that** the content of Ni in said Fe-based alloy is less than 7 wt.%.

**3.** A plunger according to claim 1 or 2, **characterized in that** the content of Ni in said Fe-based alloy is less than 0.1 wt. %.

**4.** A plunger according to any of the preceding claims, **characterized in that** the Fe-based alloy contains at least 20 wt. % Co.

**5.** A plunger according to any of the preceding claims, **characterized in that** the Fe-based alloy is an Iron - Cobalt - Chromium alloy comprising (in wt. %, balance = Fe):
| | | |
|---|---|---|
| C | 1.0 - | 2.0 |
| Si | 1,5 - | 3,0 |
| B | 2,1 - | 3,9 |
| Cr | 18,0 - | 28,0 |
| Ni | 0 - | 3,0 |
| Co | 20,0 - | 39,0 |
| W | 1,7 - | 3,4 |
| Mo | 0 - | 3,0 |
| Cu | 0 - | 3,0 |
| P | 0 - | 3,0 |
| N | 0 - | 1,0 |

**6.** A plunger according to any of the preceding claims 1 to 4, **characterized in that** the Fe-based alloy is an Iron - Cobalt - Chromium alloy comprising (in wt. %, balance = Fe):
| | | |
|---|---|---|
| C | 1,2 - | 1,8 |
| Si | 1,7 - | 2,6 |
| B | 2,4 - | 4,0 |
| Cr | 17,2 - | 26,0 |
| Ni | 0 - | 4,0 |
| Co | 24,0 - | 36,0 |
| W | 2,0 - | 3,0 |
| Mo | 0 - | 3,0 |
| Cu | 0 - | 2,0 |
| P | 0 - | 1,5 |
| N | 0 - | 1,0 |

**7.** A plunger according to claim 6, **characterized in that** the Fe-based alloy is an Iron - Cobalt - Chromium alloy comprising (in wt. %, balance = Fe):
| | | |
|---|---|---|
| C | 1,3 - | 1,7 |
| Si | 2,0 - | 2,5 |
| B | 2,75 - | 3,3 |
| Cr | 19,0 - | 24,0 |
| Ni | 0 - | 3,0 |
| Co | 27,0 - | 35,0 |
| W | 2,0 - | 3,0 |
| Mo | 0 - | 2,0 |
| Cu | 0 - | 1,0 |
| P | 0 - | 1,0 |
| N | 0 - | 1,0 |

**8.** A plunger according to any of the preceding claims, **characterized in that** the microhardness of the metal coating less than is in the range between 400 HV0.3 and 800HV0.3, most preferably in the range between 400 HV0.3 and 600 HV0.3.

**9.** A plunger according to any of the preceding claims, **characterized in that** the thickness of the metal coating is between 1 mm and 3 mm, preferably, it is between 0.5 mm and 2 mm.

**10.** A plunger according to any of the preceding claims, **characterized in that** the metal coating is applied by spraying.

**11.** A plunger according to any of the preceding claims 1 to 9, **characterized in that** the metal coating is applied by dipping.

**12.** A plunger according to any of the preceding claims 1 to 9, **characterized in that** the metal coating is applied by pasting.

**13.** A plunger according to any of the preceding claims 10 to 12, **characterized in that** the applied metal coating is fused at a fusing temperature ranging between 1,020 °C and 1,150 °C, preferably at a fusing temperature ranging between 1,050 and 1,080 °C.

**14.** A plunger according to any of the preceding claims, **characterized in that** hard particles are embedded in the Fe-based alloy.
